# EUROPEAN PATENT APPLICATION

(11) **EP 1 387 301 A2**
(43) Date of publication of application: **04.02.2004**
(21) Application number: 03254547.7
(22) Date of filing: 19.07.2003
(51) Int. Cl.: G06F 17/30

(54) **Establishment of network connections**

(30) Priority: 31.07.2002 GB 0217795; 01.10.2002 GB 0222696
(71) Applicant: Hewlett-Packard Development Company, L.P., Houston, TX 77070 (US)
(72) Inventor: Christodoulou, Athena, Easton, Bristol BS5 6EQ (GB); Taylor, Richard, Olveston, Bristol BS35 4BZ (GB); Tofts, Christopher, Iron Acton, Bristol BS37 9XJ (GB)
(74) Representative: Jones, Bruce Graeme Roland

(57) **Abstract**

Connection of a client browser to a server hosting a sub-page in a website via a link from a principal page at a higher level in the hierarchy of pages is established by actuation of a link sent to the client with the principal page. The link includes a signifier unique to a given server on which the sub-page is hosted, so that resolution of the URL in the link need not be performed dynamically at the server side.

## Description

### BACKGROUND TO THE INVENTION

### 1. FIELD OF THE INVENTION

The present invention relates to the establishment of network connections, such as for example, the establishment of a connection from a client computing entity ("client") to a server computing entity ("server") which hosts media content, for example on a website.

The home page of a website is often simply a series of pointers to other parts of the site (or indeed to other distinct sites, which in the context of the present application may nonetheless be regarded as being "below" the home page in a hierarchy because they are reachable via a link on the home page). These pointers are usually implemented by one or more hyperlinks, and so for new visitors to the site availability of the home page is important if they are to be able easily to navigate the site (and where appropriate, e.g. in circumstances outlined above, any associated site) to the fullest extent possible. When a connection is made to a particular web site, the initial connection is therefore usually established with a primary or main server because it hosts the home page, and results in the primary server returning a copy of the home page to the browser programme within the requesting client. In practice several primary servers are likely to be employed, with one primary server being the master and the others being slaves to that master. This arrangement enables content changes which are implemented on the master primary server to be automatically replicated on each of the slaves. Increasingly, the provision of constant availability and consistently high performance of a website are seen as important. Therefore, because the majority of all new network traffic to the site will initially be requesting the home page, and will therefore be directed to one of the primary servers hosting the home page, maintenance of the primary servers' ability to provide such availability and performance is regarded as critical, which in turn means that any measures which can be taken to reduce load on the primary servers are potentially valuable.

One commonly employed such measure is to host pages which are accessible from the home page (usually via the actuation of links on the home page) on one or more further servers separate to the primary server or servers, known in this application as secondary servers. This has several advantages: firstly the load on the primary server(s) is, comparatively speaking, reduced, since when a link on the home page is actuated, the sub-page (so called in this instance because it is accessible via a link on the home page) to which that link points will be located on one of the secondary servers. Thus upon actuation of a link to a sub-page the browser within the requesting client will be connected to the relevant secondary server by the main server, so that the secondary server and not the main server will be performing all of the relevant tasks in accordance with hypertext transfer protocol (http), and will return a copy of the sub-page to the browser programme within the requesting client. This means that, even at times of extremely heavy traffic, the primary server is simply dealing with requests for the home page, and possibly also passing requests for sub-pages to the secondary server or servers, rather than actually processing requests for sub-pages, which are frequently richer in content than the home page and therefore more apt to require greater time to transfer from a server to a client.

A further advantage of this approach is that it enables the provision of a degree of fault tolerance to failure or overloading of a secondary server. If several secondary servers are in service, and there is at least some degree of duplication in the various sub-pages that they host, a request for a particular sub-page may be directed to any secondary server on which that page is hosted, thus reducing the possibility that any sub-page is unavailable.

### 2 DESCRIPTION OF RELATED ART

GB 2363952 discloses a method of balancing load among a plurality of mirror servers, in which a script transmitted to a user with a web page is executed to create connections with each of the mirror servers, and the mirror server having a the shortest response time is selected.

### SUMMARY OF THE INVENTION

A first aspect of the present invention provides a method of providing a sub-page of a website to a requesting client comprising the steps of:
sending to the client, with a copy of a first web page, a plurality of links each of which points to an address of a server on which a copy of the sub-page is hosted;
actuating the link; and
displaying an alias for the predetermined address at the client.

The display of an alias prevents a user at the client side from easily being able to determine the genuine address of the actual server to which the client is being connected. In the absence of such knowledge the user is less able to override any policies implemented at the server by the dissemination of addresses of, for example, secondary servers to clients.

In one preferred embodiment, a plurality of links are provided with the first web page, each of the links pointing to an address of a secondary server hosting the sub-page.

In accordance an embodiment of the present invention, policy may establish which server addresses to send to a given client on the basis of client characteristics, such as for example technical specification, or network characteristics.

Preferably, in such an instance it is preferable for the servers hosting a sub-page to be provided with a mechanism for denying what may be defined as abusive use of simultaneous connection attempts, which may be done by identifying the browser programme (from data contained within the http request for the page in question) and in the event of an abuse being identified, denying one or more of the simultaneous connection.

### BRIEF DESCRIPTION OF DRAWINGS

Embodiments of the invention will now be described, by way of example, and with reference to the accompanying drawings in which:
Figs. 1 to 3 are schematic illustrations of the process of establishing connections between one or more clients and servers for the purpose of retrieving web pages;
Fig. 4 is an example of javascript which generates an alias address in the examples of Fig. 1 to 3 and 5 to 9;
Figs. 5 to 9 are schematic illustrations of further processes of establishing connections between one or more clients and servers for the purpose of retrieving web pages;
Figs 10 and 11 are flowcharts of different ways in which multiple alternate links may be exploited; and
Figs. 12 and 13 show code for implementing the exploitation of multiple alternate links shown schematically in Figs. 10 and 11 respectively.

### DESCRIPTION OF PREFERRED EMBODIMENTS

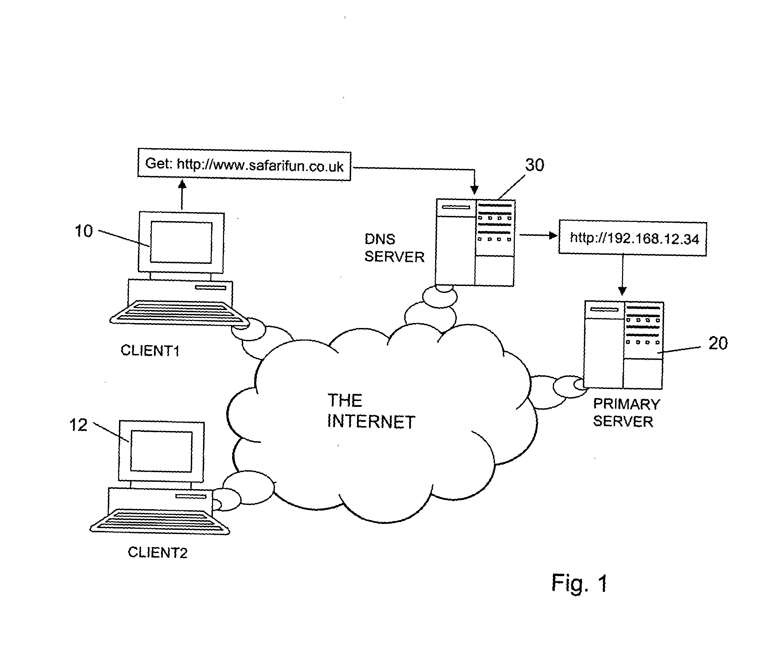

Referring now to Fig. 1, first and second client computing entities 10, 12 are connected to the Internet. The web browsing programme (not illustrated specifically) of the first client 10 is seeking to connect to a website (fictitious - at the time of writing) providing safari information, whose URL is http://www.safarifun.co.uk, and which is hosted on a primary or main server 20. In practice connecting to this website actually means downloading a copy of its home page from the primary server 20, which for websites supporting heavy traffic, is likely to be one of a plurality of primary servers, one of which is a master to which the others are slaved. Such an arrangement provides the power of several servers to support heavy traffic for the home page, but at the same time means that in the event that the content on the home page is to be changed, it only need be changed on the master primary server, whereupon the content on each slave primary server has its content reconciled with that on the master in a manner known *per se,* and which will therefore not be discussed further.

In order to connect to a primary server (only one of which is illustrated herein) 20, the URL of the website first needs to be converted, or "resolved" into an Internet Protocol address ("IP address" - here 192.168.12.34), which is a series of numbers signifying the location of the primary server 20 within the Internet. This process takes place at what is known as a Domain Name Service ("DNS") server 30, whose own IP address will typically be stored in the client 10 as part of the process of connecting the client 10 to the Internet. In Fig. 1 the process of the browser connecting to the DNS server 30 and the resolution of the URL for the requested website into the IP address of the primary server 20 by the DNS server 30 are illustrated schematically.

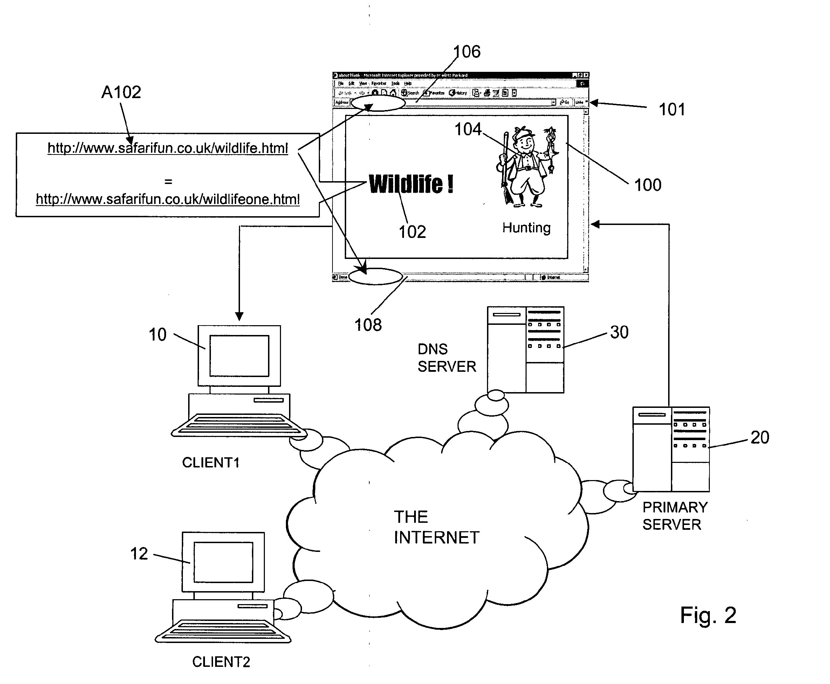

Referring now to Fig. 2, once connection of the client 10 and the primary server 20 has been established, the primary server returns a copy of the home page 100 to the client 10 and this is displayed in a window 101 of a web browser programme (not shown *per se* in Fig. 2) running on the client 10 . It can be seen from Fig. 2 that the home page contains two icons: one for "wildlife" 102, and the other for "hunting" 104. The icons 102 and 104 are essentially visual representations of links to web pages at which subject matter signified by them is located.

In the present application the term "link" is intended to include within its scope a pointer from one location to another, which is actuable to cause connection from the location of the link to the location to which the link points. In one embodiment a link is essentially a series of machine-executable instructions, usually in the form of a block of code, which executed to connect to a predetermined address. Execution is usually initiated by some user action, for example clicking on an icon displayed by a graphical user interface, such as a window of a web browser. Usually, the icon provides some visual signification to the user of the subject matter located at the address to which the link points, in this instance the banner "wildlife" or the picture of the hunter, or sometimes simply text denoting the address to which the link points, e.g. http://www... Such links are referred to as hyperlinks. Links represented by the icons 102, 104 are hyperlinks, that is to say either of these may be actuated by clicking upon the relevant icon to cause the browser programme to navigate to the page in question (by virtue of the operation of code which is executed when the icon is clicked).

In the vernacular of computer users the distinction between a link on the one hand, e.g. the code executable to establish a connection, and on the other hand the icon providing both the visual representation of that code and a means for its actuation is blurred, so that the term "link" is frequently used by those skilled in the art to refer to the icon and associated code in combination. This *de facto* convention will be adopted henceforth in this specification unless the context requires otherwise (e.g. where precision is required to distinguish between the code and an icon representing it, or in the claims where the term link is intended to be interpreted broadly to encompass both useages).

A page to which such a linking action causes connection is referred to herein as a sub-page because it is accessible via a link on another page, which in this instance happens to be the home page, but may for example be a page on an entirely independent site. The term sub-page therefore refers essentially to the subsidiarity of the destination page with respect to the page on which the link to the sub-page is located in terms of the immediate order of navigation of one page to another, and is not intended to carry any further connotations.

Actuation of the link represented by the icon 102 thus causes the browser programme within the client 10 to seek connection to a predetermined IP address at which the subject matter signified by that link is located. This IP address is usually coded in terms of a URL (and this link, visually represented here by icon 102, and pointing to this URL may alternatively be represented by the text of the URL itself for example, rather than an icon), such as in the present case:
http://www.safarifun/wildlifeone.html
and which is resolvable to the IP address of a particular secondary server on which the sub-page "wildlife" is hosted. In the present example however, it is desirable to prevent a user becoming aware of the existence of the actual URL (or indeed the actual IP address) for the secondary server, and so an alias given the reference numeral A102:
http://www.safarifun/wildlife.html
of the true URL is displayed in the address bars on the browser window, which in this example are located at the top and bottom 106, 108 respectively of the window 101. One reason for this is that different URLs for different secondary servers hosting the same wildlife sub-page may be provided to different clients under the same alias.

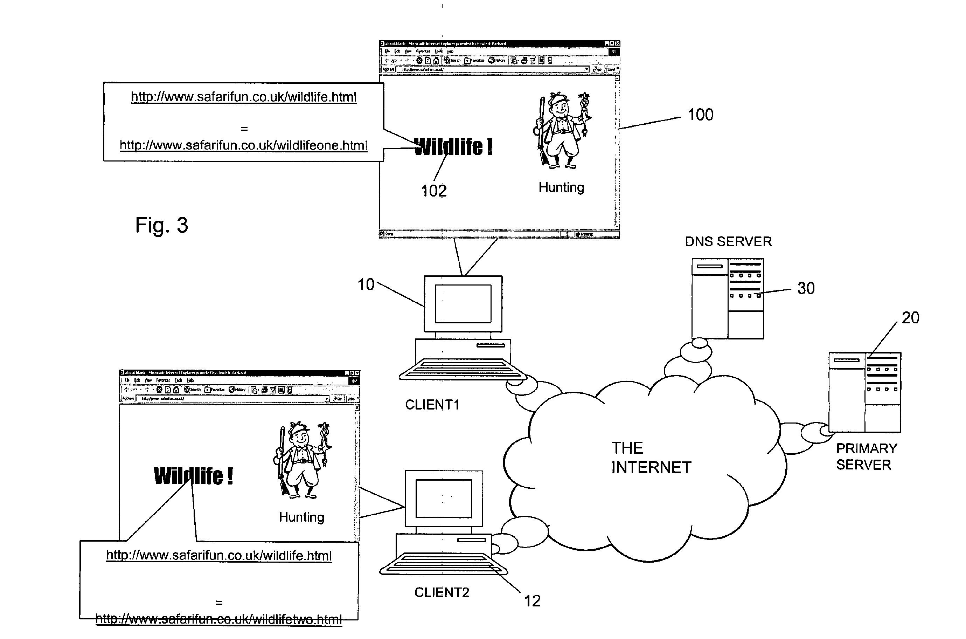

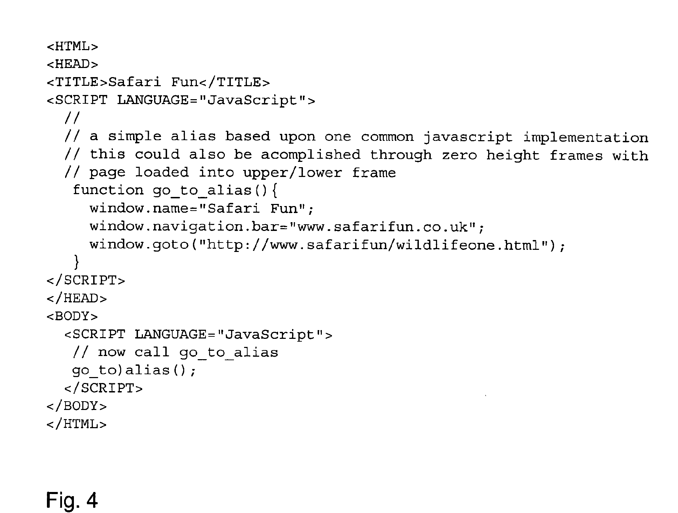

An example of this is illustrated in Fig. 3, where the client 12 has a different copy of a home page which has the same alias URL for the wildlife link, but a different actual URL, ending in ".../wildlifetwo.html", and which therefore identifies a different secondary server to the link on the page provided to the first client 10. By displaying an alias of the true URL, a user is prevented from seeing the genuine location to which the link points; knowledge of which could allow the user to circumvent policies which the provider is seeking to enforce (for example which secondary server is to be used in order to balance load on the various secondary servers), examples of which will be described subsequently in this specification. The display of the alias is achieved by executing instructions, here provided by a block of code either associated with the link, or even forming part of it. An example of such code is illustrated in Fig. 4, in the form of javascript.

By specifying in the link the actual address of a particular secondary server for the sub-page, the decision regarding which secondary server a request for a sub-page should be directed to upon actuation of the link take place in the client, but according to policy established at the server side. Thus the load on the primary server or servers, or indeed a potential bottleneck at the DNS server is reduced.

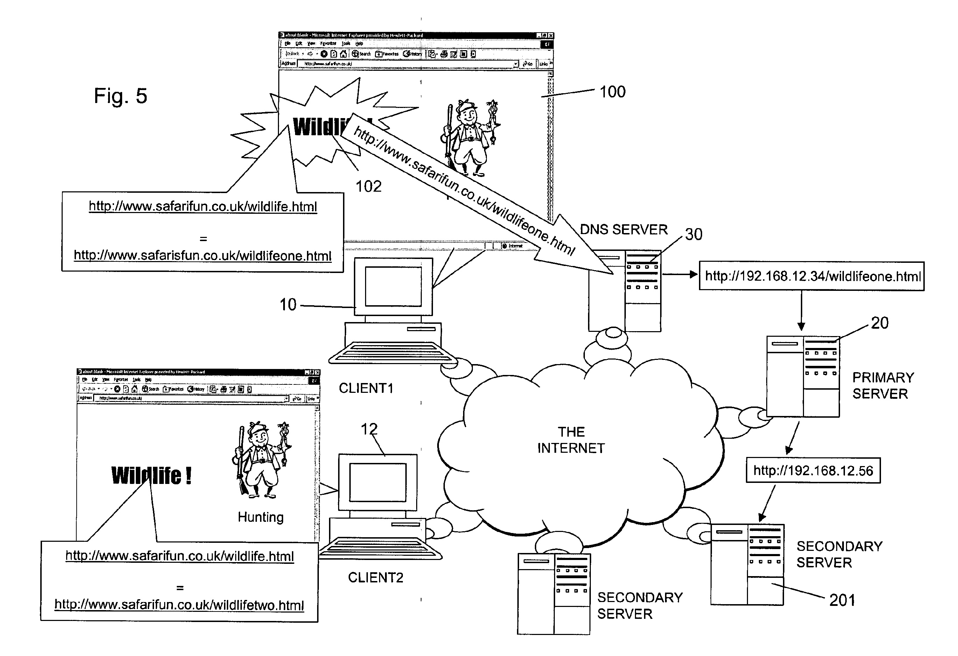

Referring now to Fig. 5, when the wildlife link represented by icon 102 is actuated (this action being signified by the "action" graphic around the icon 102) in the browser of the first client 10, the browser connects to the DNS server to obtain resolution of the URL into an IP address. In this first example, the DNS server is able only to resolve the primary URL, that is to say: http://www.safarifun.co.uk, because it does not "recognize" the subsequent character string (i.e. the website administrator has not registered an IP address for the URL as a whole with the DNS). Therefore, in the first instance actuation of the link 102 causes connection to the DNS server and resolution of the primary URL to the IP address of the primary server 20. Once connection to the primary server 20 has been established, the primary server 20 resolves the full URL to an IP address of a secondary server 201 at which the sub-page "wildlife" is hosted. This resolution is performed in accordance with information within a look-up table typically stored in the memory of the primary server 20, and which was established at the time the home page containing the link 102 was sent out to the first client 10. Following resolution of the full URL to the IP address of the secondary server 201, the primary server 20 redirects connection of the client to the secondary server 201.

A significant distinction between the sequence of events as set out in the example described above and the prior art is that whereas in the above example the link 102 sent with the home page to client 10 points to the address: "...../wildlifeone.html", (which address is resolved by the primary server to the IP address of secondary server 201 in accordance with a lookup table), in the prior art, where such a resolution is performed by the primary server to divert a request for a sub-page to a secondary server, this is done dynamically, i.e. on the basis of a decision made contemporaneously. Thus in the above-described embodiment, under normal operation, no decision-making process takes place at the primary server with regard to the destination secondary server even though the connection policy of the server administrator is effectively enforced on the server side by means of the addresses of the links sent with the home page

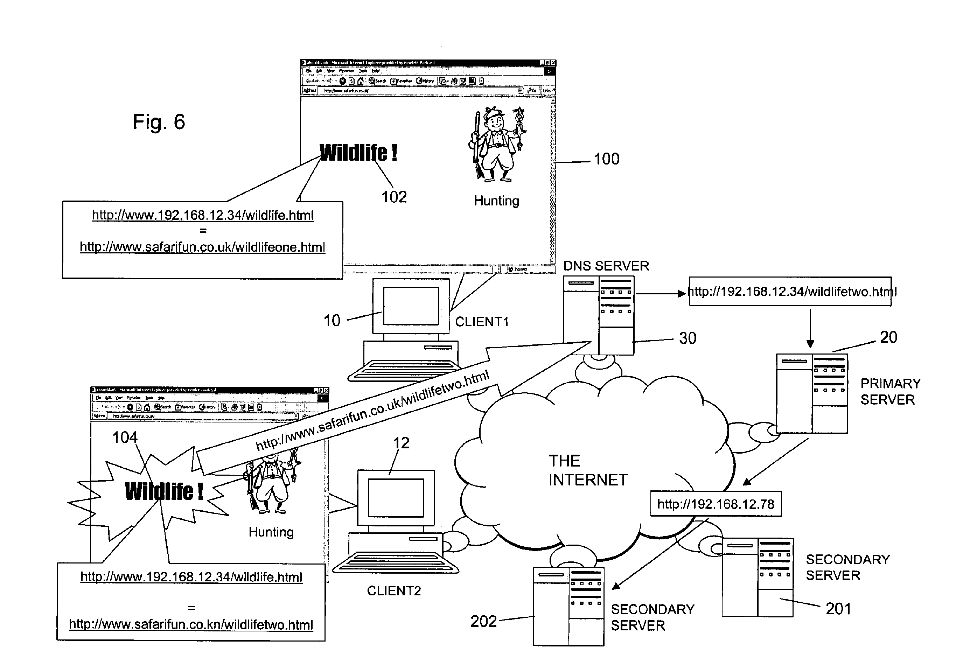

Referring now to Fig. 6, the link 102 which is sent with a copy of the home page to the second client 12 is actually different to that sent to the first client. When the link 102 is actuated within the browser of the second client 12, the URL for which resolution is requested at the DNS server 30 is therefore correspondingly different to that requested in connection with actuation of the link 102 in the browser of the first client, with the characters subsequent to the primary URL (i.e. those characters which are indicative of the sub-page being requested) in the instance of the second client being "../wildlifetwo.html", as opposed to ".../wildlifeone.html" (as was the case in the instance of the first client 10). As in the case of the scenario of Fig. 5, the primary part of the URL is resolved to the IP address of the primary server 20, which then resolves the character string "wildlifetwo.html" using the lookup table to the IP address of the secondary server 202 (here 192.168.12.78), where another copy of the sub-page is located, and the primary server 20 then passes connection of the second client to the secondary server 202. By sending home pages having different URLs for what is ostensibly the same link 102 to a sub-page, it is possible to balance the load on the differing secondary servers. This is one reason why the locations to which these links point are aliased, i.e. when actuated, the URL shown in the address bar of the browser is not the URL for which resolution is obtained at the primary server 20. In the example shown in Fig. 6 the alias is shown as the IP address (192.168.12.34) of the primary server with the ".../wildlife.html" adjunct.

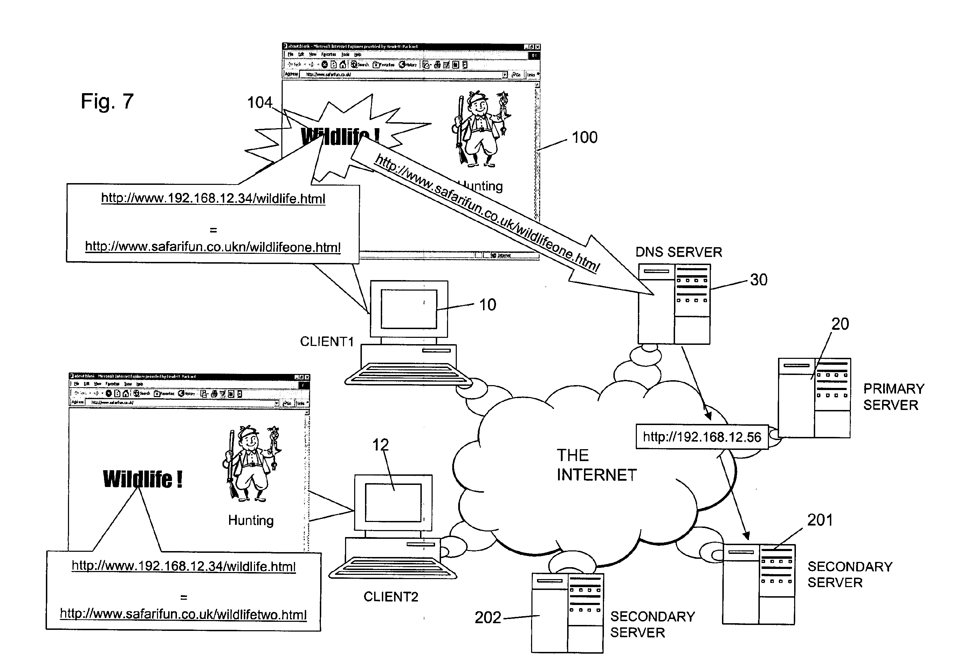

Referring now to Fig. 7, in accordance with a modification, the full URL for the link provided to each of the clients 10, 12 is resolvable at the DNS server 30 to an IP address. Thus, in this scenario, the link 102 actuated by the browser of the first client 10 translates directly to the IP address of the secondary server 201, and connection is then established directly with the secondary server 201 without first passing to the primary server 20. In accordance with this modified embodiment a similar scenario occurs when the link 102 is actuated by the browser of the second client, with the URL of that link resolving at the DNS to the IP address of the secondary server 202, but this has not been illustrated in a separate figure for brevity's sake.

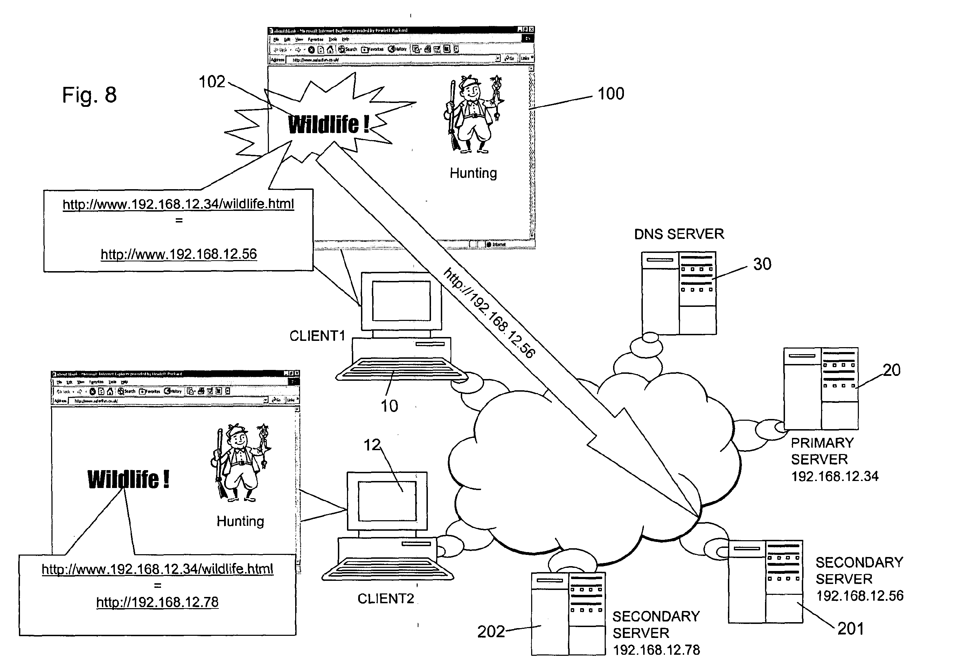

Fig. 8 illustrates yet a further alternative, in which the link 102 provided to the browser with the home page points directly to the IP address of the secondary server 201 at which the sub-page "wildlife" is hosted. This has the advantage that it obviates the need for resolution of a URL to an IP address, but the corresponding disadvantage that if it is desired to alter the IP address of the secondary server 201, this link will fail, whereas if a URL is used to identify the location, any change in the IP address of the secondary server (provided that this change is recorded with the DNS server 30) will have no effect upon the connection to the secondary server. Again, a corresponding scenario involving the actuation of the link 102 in the browser of the second client 12 has not been illustrated since it adds nothing to the understanding of the scenario. As with the example of Figs. 6 and 7, in this example the alias also includes an IP address of the primary server 20.

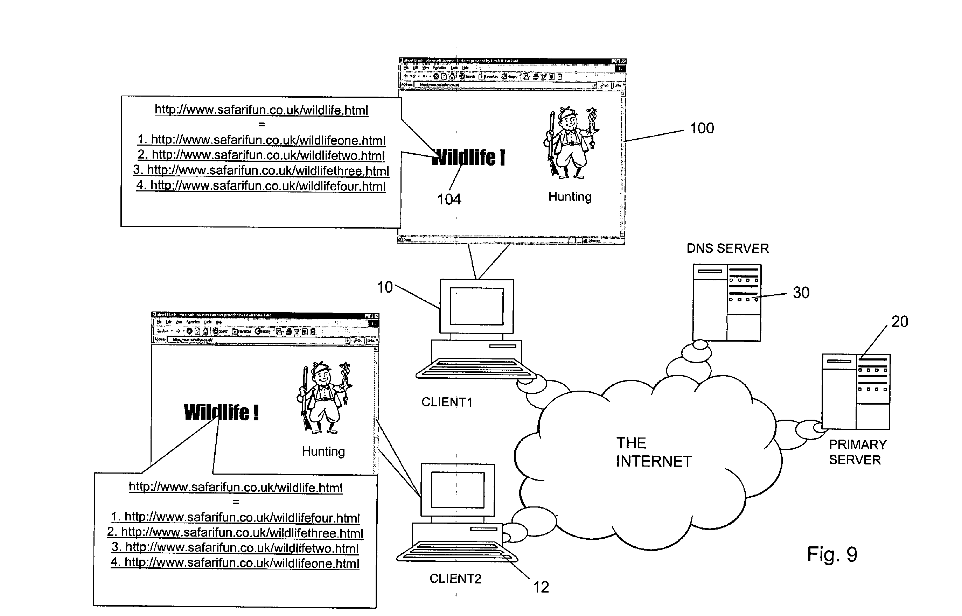

The various embodiments of the invention thus far described illustrate, *inter alia,* the principle of providing, in a link sent with a home page, the address of the particular destination secondary server, so that the issue of which secondary server to which a client is to be connected upon actuation of the link does not need to be dealt with by a primary server. There are however further advantages of providing such links. Referring now to Fig. 9, in a modification of the scenarios previously described, when the primary server sends a home page to a client, the home page includes a plurality of links, each pointing to a different address of a secondary server hosting a wildlife sub-page. As previously actuation of each of these links causes an alias to be displayed at the user interface, for the reasons previously described, and in this case, all of the plural links have the same alias. These plurality of links may be used to optimise performance in a number of ways.

Referring now to Fig. 9, in a first example, when the wildlife link 102 is actuated code associated with the link 102 causes the sequential actuation of each link based on some predetermined criterion. One such criterion is whether an actuated link establishes a connection within a predetermined period of time. In the example of Fig. 9, if connection to the particular secondary server identified by the first listed URL (http://www.safarifun.co.uk/wildlifeone.html) in the plurality of links sent to the first client fails to be established within a given time period, machine executable code sent with the link operates to abort this connection attempt, and then attempts connection to the secondary server identified by the second URL (http://www.safarifun.co.uk/wildlifetwo.html) in the list, and so on. The machine-executable code associated with the link thus provides for sequential attempts to connect to the different secondary servers identified by the different URLs in the event of a timeout failure to connect to any one of the listed URLs. (NB as previously the same alias is preferably displayed for all links).

If the same set of alternate links are provided to each requesting client, the links are preferably provided in a variety of orders to different clients so that the load on the various secondary servers corresponding to the different URLs is at least approximately balanced. Thus in the illustrated example of Fig. 9, the first client 201 and the second client 202 have received the same four alternate links but in a different order; with client 10 receiving links to : /wildlifeone; /....two; /..... three; /.... four, in that order, and client 12 receiving links to locations: /wildlifefour; /.....three; /......two; /.....one. One manner in which this may be achieved is simply to provide the links in a random order on each occasion, which will therefore, for large numbers, ensure an approximately equal distribution of loading liability for each secondary server. Alternatively, the order in which the links are provided could be monitored continually with a log being kept of the various occasions a given alternate link has been provided at a given place in the order, and the log used to ensure equal distribution of loading liability.

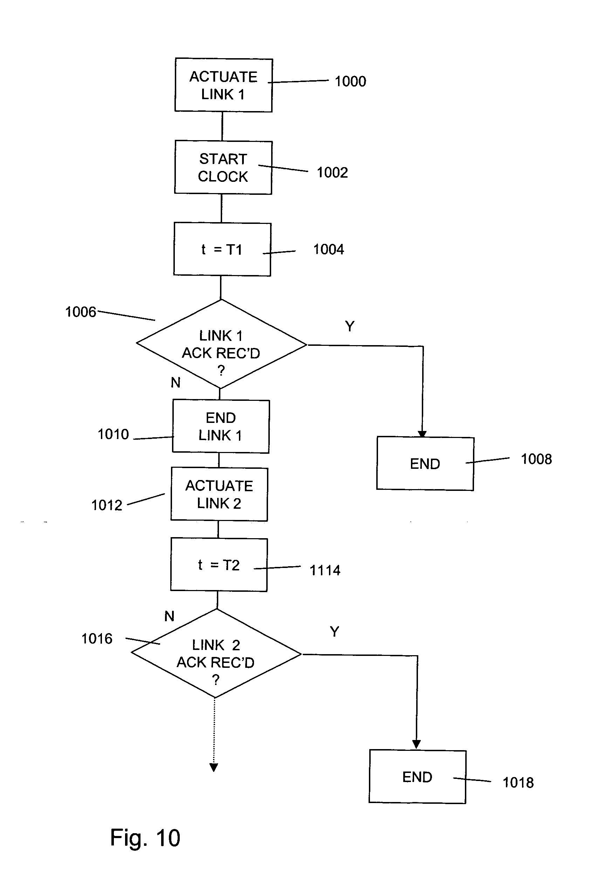

This method of using a plurality of links is illustrated in the flowchart of Fig. 10. At step 1000 the first link, that is to say the link at the top of the "list" of the plurality of links is actuated, whereupon a clock is started at step 1002. At step 1004 a first predetermined interval of time, T1 has elapsed which triggers a decision step 1006 determining whether an acknowledgement to the "Get" request of the first link has been received. If such a request has been received then connection is deemed to have been established (although other milestones in the retrieval of a sub-page may be used as desired) and at step 1008 the routine ends. If the acknowledgement has not been received then at step 1010 the first link is terminated and a second link actuated at step 1012. After elapse of a further time interval T2 at step 1014 a further decision step 1016 is triggered to determine whether acknowledgment to the Get request of the second link has been received, whereafter the routine follows the same form as thus far described.

In a further modification, an even greater number of alternate links may be provided, and by analogy with the example of Figs. 3 to 7, different sets of alternate links are sent to different clients (although obviously this is limited by the number of servers available), further balancing the load on the corresponding secondary servers.

It is noteworthy in the method of this embodiment, firstly that the links are actuated in an order determined at the server side (for example on the basis of a policy to balance load on secondary servers), and secondly that the decision-making process with regard to whether a particular link has been successful is made on the basis of one or more predetermined criterion defined at the server side. Thus, although the client is provided with several links, each of which is, in theory at least, capable of establishing a connection to retrieve a sub-page, actuation of those links is nonetheless performed in accordance with server side policy (albeit that implementation of this policy may occur in the client). This is a significant difference between the method of this embodiment and that disclosed in, for example GB 2363952, which devolves decision-making with regard to which links are most preferably used/actuated to the client - thus taking any opportunity to balance load on secondary servers for example, away from an administrator.

The sequential use of alternate links in the manners described above provides tolerance at the client side of faults at the server side. However, sequential actuation can be time consuming, and if speed of connection is an important parameter then in a further example, it is possible to configure the code associated with the links to cause two or more, or even all of the alternate links to activate simultaneously. This provides the advantage to the client that the fastest performing link on any given occasion will always establish a connection within the shortest possible time, which is not necessarily the case with sequential actuation if the fastest link is not the first-actuated link. Preferably, in order to avoid excessive duplication, the connections sought by the slower links will be aborted at some predetermined milestone in the course of the establishment of a full connection by the fastest link, for example upon having found the sub-page, for example.

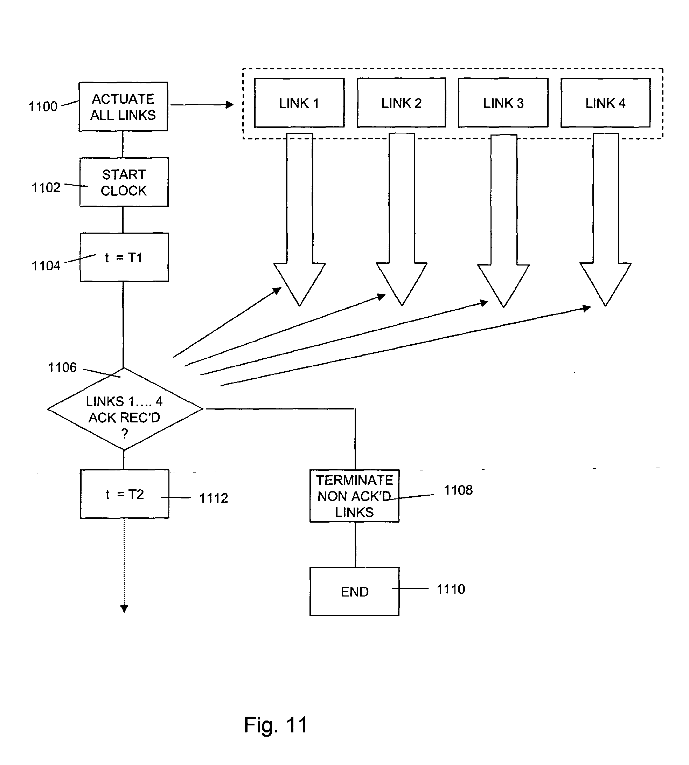

An example of this use of multiple links is shown in the flowchart of Fig. 11 and starts at step 1100 with actuation of all four links simultaneously. At step 1102 a clock is started, and at step 1104 the passage of a first time interval T1 triggers a decision step 1106 which determines whether any of the links 1 to 4 has received an acknowledgement to it Get request, whereupon at step 1108 if such an acknowledgement has been received all links in respect of which no acknowledgement has been received are terminated and the process ends. If two or more links have received acknowledgement after this time interval then a further process step, not shown determines which of these links is to continue. One example of such a step is the performance of a leader election, known *per se* and not discussed further herein. In the even that no link has received acknowledgment after time interval T1, then decision step 1106 (and its consequent actions) are repeated after time interval T2, etc.

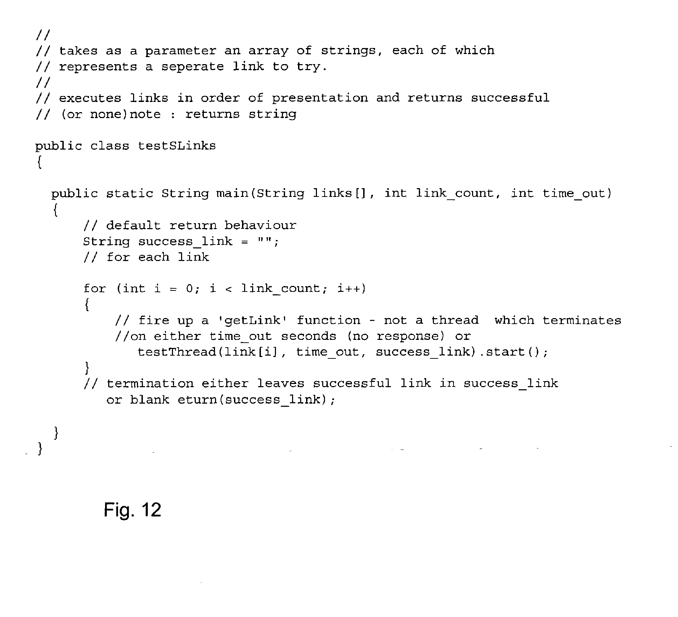

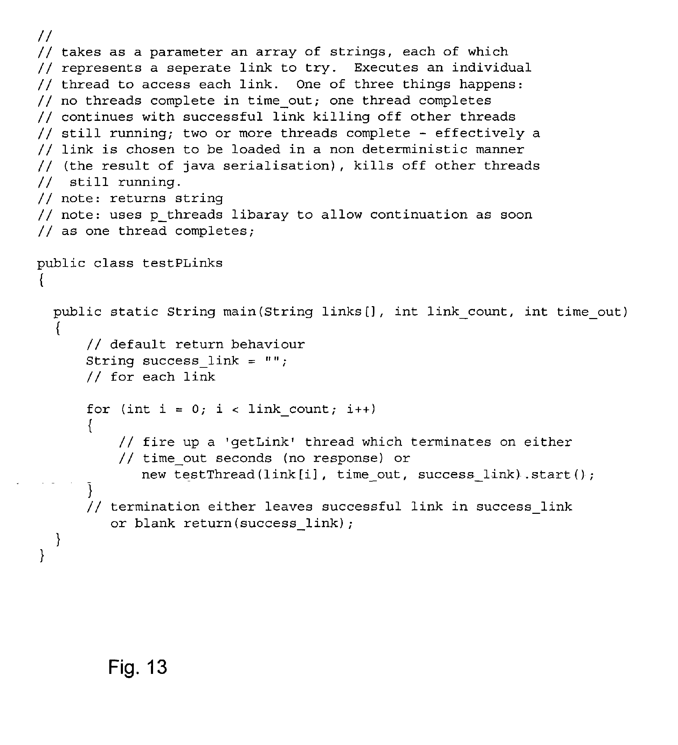

Code enabling sequential actuation of a plurality of links, as illustrated schematically in Fig. 11 is shown in Fig. 12, and code enabling simultaneous actuation of a plurality of links as illustrated schematically in Fig. 11 is shown in Fig. 13.

The possibility for simultaneous actuation of one or more alternate links however potentially creates a problem for the secondary servers, since such a mode of operation is open to abuse, with the result that it generates a substantial amount of redundant load upon the secondary servers as a result of all of the connections which are sought and then aborted, and therefore potentially damages attempts to balance load upon the secondary servers. Indeed these potentially damaging consequences are a potential outcome quite generally whenever a browser in a client does not follow the actions set out in the code associated with whatever links have been provided to it. In order to provide the possibility of reducing damage caused by deviant client browser behaviour, data relating to interaction behaviour of a given browser (which identifies itself to a server each time an http request is made) in a server log can be used to match the actual behaviour of a given client browser to the anticipated behaviour of that client browser based on the nature of the alternate links and associated code issued to that browser. If significant deviation is found between the two then an assumption can be made to the effect that the client browser has been hacked to adopt behaviour deviant to that intended, and the client browser's access to one or more of the secondary servers can be reduced or removed as appropriate.

The various modifications described herein are not limited to use in connection with scenario with seminar in the context of which they were first described, and are generally applicable.

## Claims

1. A method of providing a sub-page of a website to a requesting client comprising the steps of:
sending to the client, with a copy of a first web page, a link which points to an address of a server on which a copy of the sub-page is hosted;
actuating the link; and
displaying an alias for the predetermined address at the client.

2. A method according to claim 1 wherein a plurality of links are provided, each pointing to a different address, and each different address being an address of a server on which a copy of the sub-page is hosted.

3. A method according to claim 1, wherein the alias is an address of a server which is adapted to translate the alias into an address of a server on which a copy of the sub-page is hosted.

4. A method according to claim 1 wherein the alias is displayed on a graphical user interface of a program running on the client which is adapted to enable user navigation of the Internet.

5. A method according to claim 1 further comprising the steps of:
(a) determining, on the basis of a predetermined criterion, whether actuation of the link has been successful in obtaining the sub-page;
(b) if not, actuating another of the links; and
repeating steps (a) and (b) until the first to occur of: all of the links have been actuated; and actuation of a link has been successful in accordance with the predetermined criterion.

6. A method according to claim 5 wherein the alias displayed is the same for each of the links actuated.

7. A method according to claim 5 wherein the predetermined criterion is whether, within a predetermined period of time, a predetermined step in a process of establishing connection with a server has been reached.

8. A method according to claim 7 wherein the predetermined step is completion of a connection with a server.

9. A method according to claim 1 further comprising the steps of:
actuating each of the links simultaneously;
on the basis of a predetermined criterion, selecting one of the actuated links, and terminating all of the others.

10. A method according to claim 9 wherein the predetermined criterion is the greatest progress in establishing full connection with one of the servers after a specified interval of time following simultaneous actuation of all links.

11. A method of operating a web server to provide a sub-page of a website to a requesting client, comprising the steps of:
receiving from a client a request for a first web page hosted on the server;
sending to the client, with the first page, a link which points to an address within the Internet of a further server hosting a copy of the sub-page; and
sending with the first web page instructions which are executable upon actuation of the link to cause a browser programme to display an alias of the address of the further server.

12. A method according to claim 11 wherein a plurality of links are sent to the client with the first page, each pointing to a different predetermined address within the Internet, each predetermined address being an address of a further server hosting a copy of the sub-page, and the instructions are executable upon actuation of each link.

13. A method according to claim 11, wherein the alias is an address of a server adapted to translate the alias to an address of one of the further servers.

14. A method according to claim 11 further comprising the step of sending, in conjunction with the plurality of links, further instructions actuable upon actuation of one of the links to:
(a) determine on the basis of a predetermined criterion, whether actuation of the link has been successful in obtaining the sub-page;
(b) if not, to actuate another of the links; and
repeat steps (a) and (b) until the first to occur of: all of the links have been actuated; and actuation of a link has been successful in accordance with the predetermined criterion.

15. A method according to claim 14 wherein the links are actuated in a predetermined order established prior to dispatch from the web server.

16. A method according to claim 15 wherein the alias displayed is the same for each of the links actuated.

17. A method according to claim 15 wherein the predetermined criterion is whether, within a predetermined period of time, a predetermined step in a process of establishing connection with a further server has been reached.

18. A method according to claim 17 wherein the predetermined step is completion of a connection with a further server.

19. A method according to claim 13 further comprising the step of sending, in conjunction with the plurality of links, further instructions, actuable upon actuation of one of the links to:
actuate each of the links simultaneously;
select, on the basis of a predetermined criterion, one of the actuated links, and terminate all of the others.

20. A method according to claim 19 wherein the predetermined criterion is the greatest progress in establishing full connection with one of the further servers after a specified interval of time following simultaneous actuation of all links.

21. A web server adapted to respond to a request from a client by sending to the client a copy of a first web page and to include with the first web page a plurality of links each of which points to a different predetermined address within the Internet, each predetermined address being an address of a further server, the web server being adapted to send with the first web page and in response to said request, instructions executable, upon actuation of one of the plurality of links, to instruct a browser program in the client to display an alias of the predetermined address.

22. A method of obtaining a sub-page from a website comprising the steps of:
requesting from a web server a copy of a first web page;
actuating a link on the first web page which points to an address within the Internet of a further server hosting a copy of the sub-page; and
actuating code associated with the link to cause a browser programme to display an alias of the address of the further server.
